Europäisches Patentamt

European Patent Office

Office européen des brevets

(19)

(11)     EP 0 820 880 A1

(12)                    **DEMANDE DE BREVET EUROPEEN**

(43) Date de publication:
     **28.01.1998  Bulletin 1998/05**

(51) Int. Cl.$^6$: **B60B 27/02**,  B60B 1/00,
     B60B 1/04

(21) Numéro de dépôt: **97111386.5**

(22) Date de dépôt: **05.07.1997**

(84) Etats contractants désignés:
     **AT BE CH DE DK ES FI FR GB GR IE IT LI LU MC
     NL PT SE**
     Etats d'extension désignés:
     **AL LT LV RO SI**

(30) Priorité:  **26.07.1996 FR 9609846**

(71) Demandeur: **MAVIC S.A.**
     **01990 Saint-Trivier sur Moignans (FR)**

(72) Inventeurs:
     • **Mercat, Jean-Pierre**
       **01990 Chaneins (FR)**
     • **Harris, Alistair**
       **01990 Saint-Trivier sur Moignans (FR)**
     • **Saint-Venant, Benoît**
       **01090 Montceaux (FR)**

(74) Mandataire: **Lejeune, Benoit**
     **Salomon S.A.**
     **D.J.P.I.**
     **74996 Annecy Cedex 09 (FR)**

(54)     **Roue de cycle**

(57)     L'invention concerne une roue pour cycle comprenant une jante annulaire (1) prévue pour recevoir un
pneumatique, un moyeu central (2) prévu pour assembler la roue à un cadre, et des rayons ou bâtons de
liaison.

     La roue est caractérisée par le fait qu'elle présente
un bulbe central (4), de forme lenticulaire, ayant deux
coquilles dont les surfaces extérieures convergent régulièrement vers un plan de joint longitudinal (4c), et que
le bulbe (4) présente au niveau du moyeu une largeur
supérieure à la moitié de la longueur du moyeu (2), et
que le bulbe (4) présente au niveau du plan de joint (4c)
un diamètre compris entre le tiers et les deux tiers du
diamètre externe de la roue.

Fig 3

EP 0 820 880 A1

## Description

L'invention concerne une roue de cycle. Plus exactement, l'invention concerne une roue de cycle qui présente des qualités aérodynamiques améliorées, en particulier au niveau de sa traînée et de sa maniabilité.

De façon connue, une roue de cycle présente une jante circulaire équipée d'un pneumatique ou d'un boyau. La jante est reliée le plus souvent par deux nappes de rayons à un moyeu central par lequel la roue est assemblée au cadre du cycle.

On sait que la traînée d'une roue est une force qui résulte de la pénétration dynamique de la roue dans l'air, cette force s'opposant à l'avancement de la roue et donc à l'avancement du cycle. Cette force est influencée aussi par le vent atmosphérique.

Plusieurs solutions ont été cherchées pour améliorer la pénétration dans l'air de la roue, c'est-à-dire pour diminuer la traînée. Par exemple, on a cherché à rendre plus aérodynamique le profil de la jante et le profil de rayons. Ainsi, la demande de brevet publiée sous le numéro EP 714 791 montre une jante pour une roue à rayons avec un profil en "V" très haut en section. Le brevet US 5,350,221 décrit quant à lui des rayons profilés réalisés en matériau composite ayant une section en forme de goutte d'eau.

Une autre solution a consisté à réaliser des roues à bâtons ou à lames en matière composite. Une telle roue est par exemple décrite dans la demande de brevet publiée sous le numéro FR 2 701 899. Une autre roue est décrite dans la demande de brevet publiée sous le numéro WO 93/19944. Pour ces roues, les bâtons ou lames sont réalisés d'une seule pièce avec la jante et le moyeu. Selon l'utilisation à laquelle les roues sont destinées, elle peuvent présenter à la périphérie un profil annulaire rapporté prévu pour recevoir le pneu et fournir latéralement deux surfaces de freinage.

De telles roues sont performantes mais relativement complexes à fabriquer et elles sont coûteuses.

Certaines de ces roues sont fabriquées en matière plastique par injection. Toutefois, elles présentent un voile relativement important du fait du procédé de fabrication utilisé qui est peu compatible avec les dimensions de la roue.

Il existe aussi des roues pleines. Pour ces roues, la jante et le moyeu sont reliés par deux disques continus. Ces roues présentent une traînée frontale réduite. Toutefois, leur inconvénient est leur complexité de fabrication lorsqu'elles sont réalisées par moulage d'un seul morceau ou de deux morceaux joints, ou bien leur poids et leur inertie lorsque les disques sont rapportés sur une roue à rayons traditionnelle.

Une roue à deux disques dont la tension est réglée par l'extension latérale du moyeu central est par exemple décrite dans la demande de brevet publiée sous le numéro FR 2 617 770.

Pour ces roues, les disques latéraux présentent le plus souvent sur l'extérieur une forme de tronc de cône très évasé. Cette forme tient à la tension du disque entre le moyeu et la roue. Il est difficile dans ces conditions de travailler la courbure radiale de cette surface, c'est-à-dire de modifier la courbure radiale du disque pour améliorer encore l'aérodynamisme de la roue.

Un autre inconvénient de ces roues pleines tient au fait que les disques s'étendent jusqu'à la jante. Dans ces conditions, c'est le pneu lui-même qui forme le bord d'attaque et le bord de fuite de la roue. Or ces zones sont déterminantes pour obtenir une traînée minimale.

De telles roues présentent de plus une sensibilité au vent latéral. Le vent latéral est la combinaison entre un vent atmosphérique latéral et le vent vitesse que la roue rencontre du fait de son mouvement.

Cette sensibilité présente un avantage. En effet, dans certaines conditions de direction du vent, la traînée de la roue peut devenir négative, c'est-à-dire que le vent en glissant sur les disques crée un effet moteur.

Mais cette sensibilité présente aussi un défaut lié à la surface pleine que la roue présente au vent. La résultante de l'action du vent sur les disques de la roue se situe en effet en avant de l'axe de rotation de la roue, et, pour une roue avant, en avant de la projection de l'axe de direction autour duquel la roue pivote. Ainsi, en particulier pour une roue avant, le vent a une action qui tend à faire tourner la roue. Cette action se ressent au niveau de la direction, et à la limite, la conduite du vélo peut devenir dangereuse. Sur la roue arrière, l'action du vent latéral se ressent aussi mais à un degré moindre. Si bien que de telles roues sont rarement utilisées sur route, ou plus généralement là où le vent atmosphérique n'est pas nul.

Un but de l'invention est de proposer une roue qui présente un meilleur compromis entre les qualités aérodynamiques et la maniabilité ou les qualités de conduite, en particulier lorsqu'elle est utilisée en tant que roue avant.

Un autre but de l'invention est de proposer une roue dont la courbure de la surface qu'elle expose au vent peut être facilement travaillée.

Un autre but est de proposer une roue dont la forme du bord d'attaque et du bord de fuite que la partie centrale de la roue présente au vent peut être maîtrisée.

Un autre but de l'invention est de proposer une roue qui soit simple à fabriquer, et qui, en particulier se prête à une fabrication en série.

D'autres buts et avantages de l'invention apparaîtront au cours de la description qui va suivre.

La roue pour cycle selon l'invention présente une jante annulaire prévue pour recevoir un pneumatique, un moyeu central prévu pour assembler la roue à un cadre, et des rayons ou bâtons de liaison. Elle est caractérisée par le fait qu'elle présente un bulbe central, de forme lenticulaire, ayant deux coquilles dont les surfaces extérieures convergent régulièrement depuis l'intersection avec l'axe du moyeu vers un plan de joint, et que le bulbe présente au niveau du moyeu une largeur supérieure à la moitié de la largeur du moyeu, et que, au niveau du plan de joint, le bulbe présente un diamètre compris entre le tiers et les deux tiers du diamètre de la roue.

Ainsi, la surface externe du bulbe présente une trainée faible. Dans certaines conditions de direction de vent, la traînée devient même négative. Par contre, comme son diamètre est réduit par rapport au diamètre de la roue, la force qui résulte de l'action de l'air sur la partie pleine de la roue a une résultante qui est plus réduite et qui est localisée plus près de l'axe de rotation ou l'axe de direction de la roue, si bien que les qualités de conduite du vélo ne sont pas affectées dans des proportions importantes. La liaison à la jante par rayons ou bâtons permet d'évider une zone entre le bulbe et la jante équipée du pneu. On peut ainsi maîtriser la courbure du bord d'attaque et de fuite du bulbe. En outre la traînée de la jante et du pneu est diminuée car ces éléments sont en partie masqués par le bulbe.

L'invention sera mieux comprise en se référant à la description ci-dessous et aux dessins en annexe qui en font partie intégrante.

La figure 1 est une vue de côté d'une roue, selon un mode de réalisation particulier de l'invention.

La figure 2 est une vue de face de la roue, avec la jante représentée en coupe.

La figure 3 est une vue partielle de face et en coupe de la roue. Volontairement, les proportions n'ont pas été respectées dans cette figure pour raison de clarté.

La figure 4 représente un rayon et sa pièce d'assemblage à l'étoile.

La figure 5 montre en vue de côté l'étoile de liaison avec les rayons.

La figure 6 est une vue de face en coupe de l'étoile de la figure 4.

La figure 7 est une variante de l'étoile pour une roue arrière.

La figure 8 est une figure utilisée pour définir la forme préférée du bulbe.

La roue représentée dans les figures est une roue avant. Mais comme cela apparaîtra plus loin dans la description, l'invention s'applique également aux roues arrière, moyennant certains aménagements.

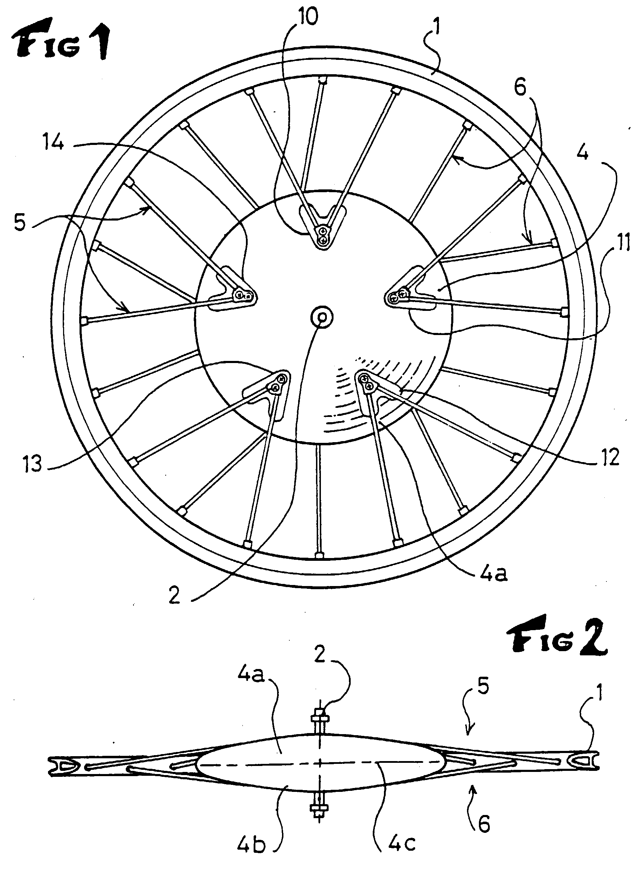

La roue représentée en figure 1 comprend une jante annulaire 1.

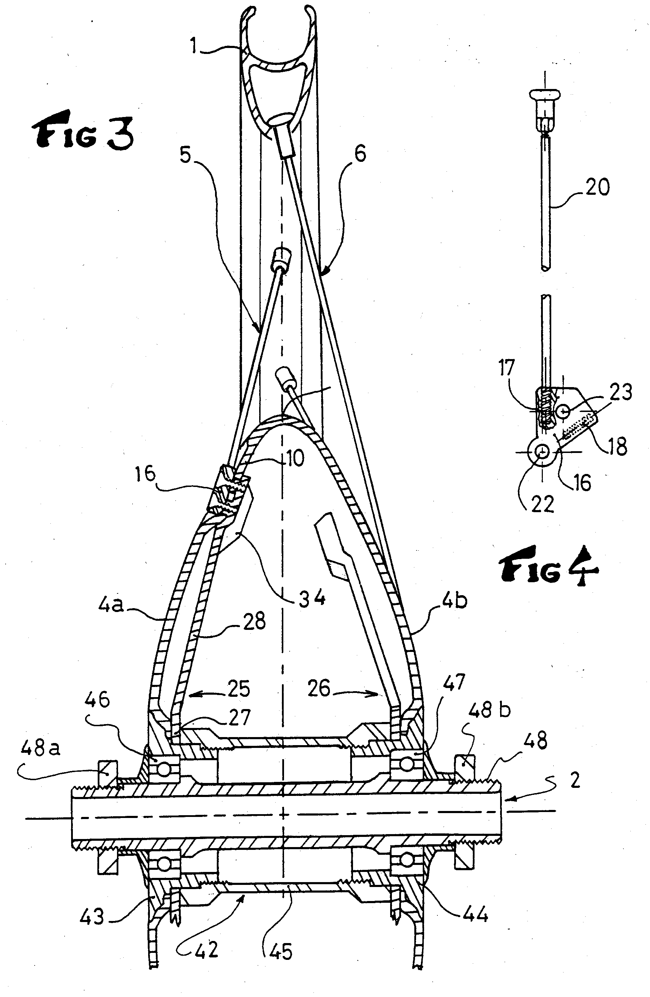

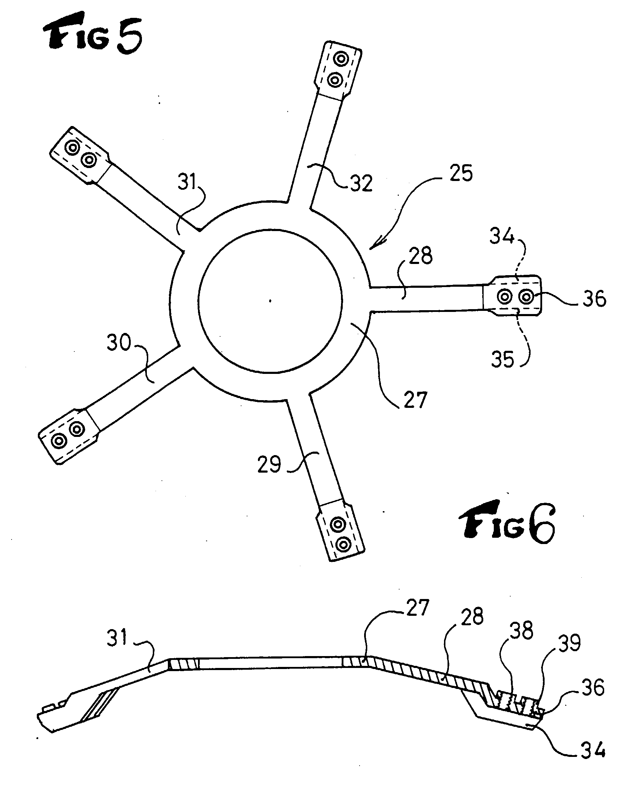

La jante est de tout type approprié, en particulier elle peut être du type à boyau ou du type à pneumatique. Elle est réalisée par exemple à partir d'un segment de profil cintré et assemblé bout à bout. De préférence, comme cela est visible en figure 2 et en figure 3, la jante présente en section un profil en "V".

Au centre, la roue présente un moyeu 2 de liaison avec une fourche du cadre. Le moyeu est de tout type approprié, et sera décrit plus en détail relativement à la figure 3.

Entre la jante et le moyeu, la roue présente un bulbe 4 qui est assemblé au moyeu, et deux nappes de rayons 5 et 6 dont les extrémités sont assemblées à la jante 1.

Globalement, le bulbe 4 présente une forme lenticulaire dont l'axe du moyeu 2 est un axe de révolution. Le bulbe 4 est formé de deux coquilles galbées 4a et 4b réunies entre elles au niveau d'un plan de joint 4c. La surface extérieure des deux coquilles converge progressivement vers le plan de joint 4c, depuis la zone du moyeu 2 vers l'extérieur.

Au niveau du moyeu, le bulbe présente une épaisseur voisine de la longueur du moyeu. A titre indicatif, on a obtenu de bons résultats avec une épaisseur de bulbe de 70 millimètres, alors que la longueur utile du moyeu était de 100 millimètres, c'est-à-dire la distance comprise entre les branches de la fourche. Cette valeur n'est pas limitative, et, de préférence, la largeur du bulbe est au moins supérieure à la moitié de la largeur utile du moyeu.

En diamètre, au niveau du plan de joint, le bulbe présente un diamètre compris entre le tiers et les deux tiers du diamètre extérieur de la jante équipée de son pneu. De préférence, le diamètre est sensiblement égal à la moitié de ce diamètre de la roue. A titre indicatif, on a obtenu de bons résultats avec un diamètre de bulbe de 300 millimètres pour un diamètre de roue de 668 millimètres, pneu compris, ce qui est le diamètre d'une roue standard.

La surface externe du bulbe présente en section par un plan passant par l'axe du moyeu, un rayon de courbure qui varie progressivement depuis une valeur infinie, ou relativement importante au niveau du moyeu 2 à une valeur nulle ou relativement faible au niveau du plan de joint 4c. En d'autres termes, la courbure d'une section peut être continue sur toute la périphérie, ou bien présenter une discontinuité dans la zone de l'axe du moyeu et/ou au niveau du plan de joint.

Avantageusement, la courbure de cette surface est définie mathématiquement d'après l'équation d'une courbe conique fermée à rayon évolutif, par exemple du type ellipse ou cycloïde, ou bien d'après les équations de segments de courbes coniques mis bout à bout.

Dans ce cas, les segments peuvent suivre également l'équation de courbes telles que les paraboles ou les hyperboles.

De préférence, pour une courbe conique dont l'équation est définie par la cote "rho" qui définit la forme de la conique, la section du bulbe est définie selon quatre portions, chacune s'étendant dans un quadrant délimité par l'axe du moyeu et le plan de joint. Les tangentes aux extrémités de ces portions sont perpendiculaires, respectivement à l'axe du moyeu et au plan de joint. Le paramètre "rho" est choisi entre 0,2 et 0,5, les valeurs comprises entre 0,3 et 0,35 étant préférées.

En se référant à la figure 8, la cote "rho" spécifie pour une courbe conique un taux le long d'un vecteur à partir d'une corde (PQ) par un point C de sommet (R). Le sommet (R) est l'intersection des tangentes à la courbe en P et Q. Le point C est à une distance maximale (CD) mesurée par une normale de la corde PQ au segment conique PQ.

Dans ces conditions, rho = a/(a + b) .

A titre indicatif, pour une ellipse à axes orthogonaux, le paramètre rho vaut $\sqrt{2}$ - 1, soit environ 0,414.

Avec une telle définition, les deux coquilles présentent une courbure qui croît de façon continue de l'axe du moyeu vers le plan de joint et qui est continue au niveau du plan de joint 4c. Cette zone au plan de joint définit le bord d'attaque et le bord de fuite du bulbe lors de sa pénétration dans l'air. Le facteur "rho" détermine la finesse du bulbe notamment dans cette zone.

Ceci n'est pas limitatif, et l'on pourrait avoir une courbure discontinue au niveau du plan de joint, venant du fait qu'à ce niveau les deux coquilles se joignent selon une arête anguleuse.

Des essais en soufflerie ont montré qu'une telle forme de bulbe était avantageuse pour réduire la traînée longitudinale de la roue, c'est-à-dire la résistance à l'avancement que la roue génère en se déplaçant selon la direction longitudinale avec un vent de face. Le vent qui frappe la roue étant la combinaison du vent vitesse créé par la vitesse propre de la roue, et du vent atmosphérique, on a remarqué en plus que si l'angle d'incidence du vent qui frappe la roue variait, c'est-à-dire par un vent atmosphérique latéral, la traînée diminuait au fur et à mesure que la direction du vent s'éloignait de la direction longitudinale, et devenait même négative, pour des plages d'angle d'incidence de l'ordre de 20 à 30 degrés par rapport à la direction longitudinale d'avancement de la roue. Ceci revient à dire que pour de telles plages d'incidence, le vent exerce un effet moteur sur la roue. Passé cette plage d'angle d'incidence, la roue "décroche", c'est-à-dire que l'écoulement de l'air sur le bulbe change de nature, et l'on retrouve une traînée longitudinale qui est de l'ordre de celle obtenue avec un vent de face.

Il est important qu'un espace libre existe entre le bulbe et la jante, c'est-à-dire que le bulbe et la jante soient reliés par des rayons ou des bâtons, pour que l'air s'écoule correctement des deux côtés du bulbe. On pense que les qualités aérodynamiques de la roue proviennent du fait que le rayon de courbure du bulbe varie progressivement, ce qui oblige les filets d'air qui longent les deux coquilles du bulbe à constamment modifier leur trajectoire, lorsque l'incidence du vent sur le bulbe est faible.

La finesse de la courbe du bulbe et la largeur du bulbe au niveau du moyeu influent sur la traînée longitudinale initiale, c'est-à-dire par vent de face, et sur l'angle d'incidence auquel le "décrochement" se produit. Plus la forme est fine et effilée, moins la traînée initiale est importante, et plus le décrochement se produit tôt.

La traînée latérale, c'est-à-dire la composante de la traînée qui est parallèle à l'axe du moyeu, présente un point d'application qui reste relativement proche de la projection de l'axe de direction autour duquel la roue est amenée à pivoter par rapport au cadre du vélo, si bien que cette composante ne perturbe la conduite du cycle que de façon modérée. Il se trouve à une distance voisine du tiers du rayon du bulbe, en avant de l'axe du moyeu.

Le bulbe confère donc à la roue des qualités aérodynamiques remarquables, tout en maintenant pour le vélo de bonnes qualités de conduite en direction ou de maniabilité. Ceci est atteint grâce à la forme du bulbe et à ses caractéristiques de dimensions par rapport au diamètre de la jante. Il faut remarquer en plus que la jante et le pneu n'exercent aucune influence importante sur les caractéristiques aérodynamiques de la jante. Notamment, contrairement aux roues à disques traditionnelles, le bord d'attaque et de fuite du bulbe, c'est-à-dire la forme du bulbe dans la zone du plan de joint n'est pas imposée par le pneu ou la jante.

Le bulbe est construit en tout matériau approprié, par exemple il est réalisé par moulage d'un matériau thermodurcissable chargé de fibres, notamment des fibres de carbone. Avantageusement, il est réalisé selon deux coquilles assemblées entre elles par collage direct ou collage d'un joint, ou tout autre moyen approprié, dans le plan longitudinal défini par la jante et la roue.

On a obtenu de bons résultats avec des coquilles 4a et 4b de 0,5 millimètre d'épaisseur. Cette valeur est seulement indicative, en effet, l'épaisseur peut varier selon le rôle que le bulbe joue dans la structure de maintien de la jante autour du moyeu.

Dans le mode de réalisation illustré, la jante est reliée au moyeu par deux nappes de rayons 5 et 6 qui sont assemblées à la paroi externe du bulbe, la paroi étant renforcée par l'intérieur au moyen de deux étoiles dont les branches servent de point d'ancrage des rayons, et dont la partie centrale est assemblée au corps de moyeu de la roue.

Les rayons présentent en section toute forme appropriée, et avantageusement une forme effilée dont la grande dimension est sensiblement parallèle au plan longitudinal défini par la jante.

Du côté de la jante, les rayons des deux nappes sont assemblés par tout moyen connu approprié, par exemple de façon traditionnelle par un écrou de rayon logé dans la jante qui est vissé sur l'extrémité filetée du rayon.

En se reportant aux figures 1 et 2, chaque nappe 5, 6 de rayons comprend dix rayons qui convergent deux à deux vers cinq évidements que présente chaque coquille. La coquille 4a visible en figure 1 présente ainsi cinq évidements identiques 10, 11, 12, 13, 14 répartis de façon régulière autour du moyeu 2. Les évidements de l'autre coquille sont disposés en quinconce par rapport aux évidements 10 à 14 pour que la position des rayons soit alternée d'une nappe à l'autre. Le nombre des rayons et des évidements est seulement indicatif, et tout autre nombre approprié pourrait également convenir.

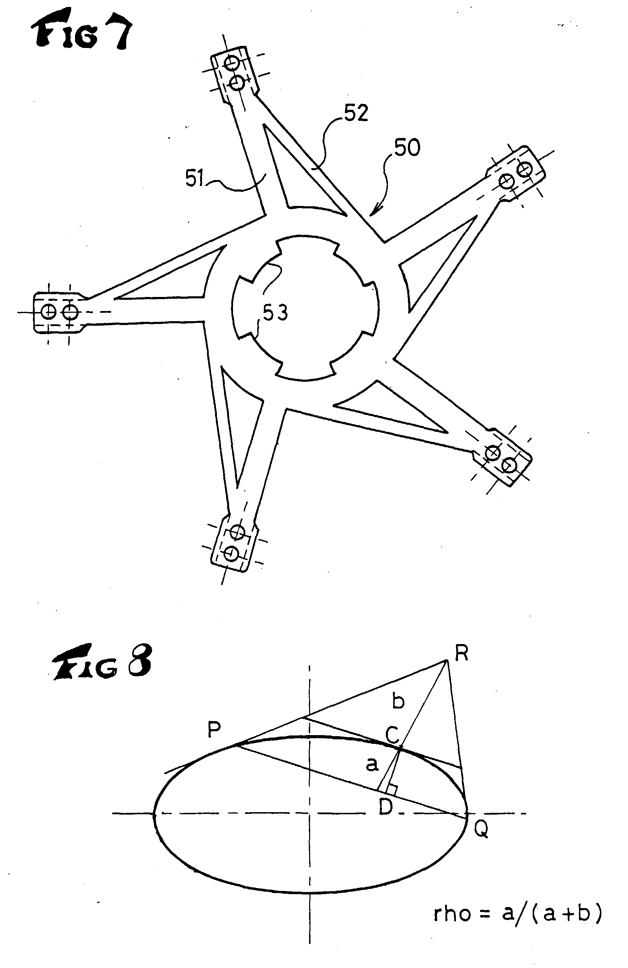

Chaque évidement est prévu pour recevoir une pièce d'assemblage d'une paire de rayons. Une telle pièce d'assemblage est plus particulièrement visible en figure 4. La pièce d'assemblage 16 qui est représentée présente globalement la forme d'un petit bloc d'épaisseur constante et de section approximativement triangulaire. L'une des faces latérales est percée de deux orifices 17, 18 orientés selon l'angle d'inclinaison des deux rayons d'une paire. Ces orifices sont prévus pour recevoir l'extrémité filetée des deux rayons d'une paire. La figure 4 montre un rayon 20 vissé dans l'orifice 17.

Chaque évidement du bulbe présente une profondeur et des dimensions suffisantes pour loger une pièce d'assemblage telle que la pièce 16. La figure 3 montre l'un des évidements, repéré 10 dans lequel la pièce d'assemblage 16 est logée. Eventuellement, une pièce d'habillage est prévue pour couvrir la pièce d'assemblage et combler l'espace entre cette pièce et la paroi de l'évidement, dans le but d'assurer la continuité de la paroi du bulbe dans cette zone. Cette pièce est collée ou assemblée par tout moyen approprié. Une telle pièce n'est pas représentée dans les figures.

La pièce d'assemblage 16 présente par ailleurs dans sa partie centrale deux orifices 22 et 23 d'assemblage au reste de la structure. Le fond de l'évidement présente également deux orifices en regard pour le passage des vis d'assemblage.

Ces vis sont prévues pour être vissées à l'extrémité de l'une des branches d'une étoile de liaison vers l'une des extrémités du moyeu. Le bulbe renferme en fait deux étoiles 25 et 26, chacune présentant cinq branches de liaison fixées au fond des cinq évidements d'une coquille et aux pièces d'assemblage des rayons. La partie centrale de chaque étoile est assemblée à chacune des extrémités du moyeu selon un mode d'assemblage qui sera décrit plus loin.

Les figures 5 et 6 représentent à titre d'exemple l'étoile 25. Elle présente une partie centrale 27 ayant globalement la forme d'une rondelle de grand diamètre, et cinq branches 28 à 32 qui s'étendent selon des directions radiales réparties régulièrement autour du centre de l'étoile. Chacune des branches se termine par une patte d'assemblage, qui, dans le mode de réalisation illustré est renforcée localement par deux nervures latérales repérées en 34, 35 pour la branche 28. Pour cette branche, la patte d'extrémité est repérée en 36.

La patte est percée de deux orifices taraudés 38, 39 prévus pour les vis d'assemblage de la pièce d'assemblage 16. De préférence, la patte présente au niveau de chaque orifice une cheminée de centrage qui traverse la paroi du bulbe. Cette cheminée est par exemple obtenue par un perçage des orifices selon une technique de perçage par refoulement. Avantageusement, les cheminées fournissent un taraudage sur une longueur supérieure à l'épaisseur de la patte.

Ainsi, au niveau de chaque évidement, la paroi du bulbe est traversée par les cheminées, elle est pincée entre une patte et une pièce d'assemblage. Elle est rendue localement solidaire du reste de la structure et contribue à la transmission des efforts entre la jante et le moyeu.

Comme cela est visible dans la figure 6 et dans la figure 3, les branches sont inclinées par rapport au plan que définit la rondelle centrale, et chaque patte est reliée à sa branche par une pliure qui place la patte en retrait par rapport à la branche.

L'ensemble est prévu pour que une fois l'étoile assemblée au bulbe et les rayons assemblés au bulbe et aux branches, la direction de chaque branche s'étende dans le plan défini par les deux rayons qui sont assemblés à cette branche. La profondeur des évidements et la position des évidements sur les coquilles du bulbe sont également déterminées d'après cet alignement.

On a obtenu de bons résultats avec une étoile dont les pattes se situent à une distance de l'axe du moyeu égale au deux tiers du diamètre du bulbe au niveau du plan de joint.

Les deux rondelles centrales des étoiles sont assemblées à un corps de moyeu 42. Selon le mode de réalisation illustré en figure 3, le corps de moyeu 42 comprend deux joues latérales 43 et 44 qui sont assemblées à un tube central 45. De préférence, les joues présentent en direction du tube un embout central fileté, et les extrémités du tube sont localement taraudées pour que cet assemblage se réalise par vissage. L'assemblage pourrait être différent.

De plus, le diamètre intérieur des rondelles centrales des étoiles est légèrement inférieur au diamètre externe des extrémités du tube pour que les étoiles soient emprisonnées entre les extrémités du tube et les joues latérales à l'assemblage du corps de moyeu. Les deux coquilles présentent quant à elles un orifice central dont le diamètre est voisin du diamètre intérieur des étoiles. Les zones situées autour de ces orifices sont prévues pour être emprisonnées entre chacune des rondelles et la joue latérale.

Au serrage du tube sur l'embout d'une joue, la rondelle est pincée entre la joue et l'extrémité du tube, et l'on prévoit alors entre la joue et la rondelle un jeu légèrement inférieur à l'épaisseur de la paroi du bulbe pour qu'il se produise un léger écrasement. On est ainsi assuré d'un bon assemblage du bulbe au corps de moyeu.

Enfin, les deux joues latérales 43 et 44 présentent un orifice central dans lequel sont logés deux roulements 46, 47 de liaison avec l'arbre 48 du moyeu, cet arbre étant prévu pour être traversé par la tige d'assemblage rapide du moyeu à la fourche du cadre. De préférence, l'arbre 48 porte latéralement deux rondelles 48a et 48b dont l'écartement correspond à l'écartement des bras d'une fourche. Les rondelles sont par exemple en appui d'un côté sur un épaulement de l'arbre 48, de l'autre sur une bague filetée qui est vissée sur l'arbre et permet le réglage du jeu axial. Tout autre moyen approprié convient.

Les deux joues et les tubes présentent tout moyen approprié de serrage, par exemple pour le tube une zone locale interne de section hexagonale ou bien portant des cannelures, et pour les joues par exemple deux ou plusieurs petits orifices prévus pour une clé à ergots. On peut également prévoir sur chaque coquille des moyens de repérage visuels ou mécaniques par exemple par emboîtement, pour que les pattes des deux étoiles et les évidements des deux coquilles soient bien en place les uns par rapport aux autres.

L'étoile et les différents éléments du corps de moyeu sont réalisés en tout matériau approprié, par exemple en alliage d'aluminium. L'étoile pourrait aussi être réalisée en un matériau composite par moulage, ou même être intégrée dans chacune des coquilles au moment de leur fabrication.

Naturellement, la construction du moyeu n'est pas limitative pour l'invention, et toute autre construction appropriée convient.

La figure 7 montre une variante de réalisation de l'étoile, qui est prévue pour équiper la coquille d'une roue arrière qui est située du côté de la roue libre. L'étoile 50 représentée présente cinq bras, tels que le bras 51. Chaque bras est soutenu par un hauban 52 qui relie, par exemple, l'extrémité d'un bras à la base d'un bras adjacent. Les haubans sont prévus pour travailler en traction sous l'action du couple transmis par la roue libre à la roue. De préférence dans ce cas, le diamètre intérieur de la partie centrale de l'étoile porte des cannelures 53 ou tout autre moyen approprié prévu pour coopérer avec un moyen complémentaire du corps de moyeu pour assurer un accouplement angulaire des deux éléments et ainsi assurer la transmission du couple entre le corps de moyeu et la jante.

Concernant la roue arrière, compte tenu de l'emplacement nécessaire pour le mécanisme de roue libre, il est possible de réaliser le bulbe selon deux coquilles dont celle qui est située du côté de la roue libre est plus aplatie que l'autre. Il est également possible de réaliser le bulbe selon deux coquilles identiques aplaties.

Selon une autre solution, le bulbe est décalé par rapport à la jante du côté opposé à la roue libre, et il présente deux coquilles identiques.

L'invention n'est pas limitée aux différents modes de construction qui ont été décrits en particulier au niveau de la structure qui relie le moyeu à la jante.

Par exemple la roue pourrait être construite de façon traditionnelle avec des rayons qui relient la jante directement au moyeu, et le bulbe comprend deux coquilles rapportées qui sont traversées par les rayons.

Selon un autre mode de construction, les rayons relient la jante aux coquilles du bulbe, où leur tête est ancrée, et le bulbe assure la reprise des efforts en direction du moyeu. Eventuellement, dans ce cas, le bulbe est renforcé de l'intérieur.

Selon un autre mode de construction, le bulbe est prolongé sur l'extérieur par une pluralité de bâtons qui relient le bulbe à la jante. Ainsi que cela est déjà connu pour les roues à bâton réalisées en matériau composite, cela est déjà connu, les bâtons sont réalisés par moitié d'une seule pièce avec les deux coquilles du bulbe. Ils sont orientés de façon radiale, ou sont inclinés par rapport à cette direction. Ou bien, dans ce cas, la jante est réalisée de façon traditionnelle et elle est assemblée aux extrémités des bâtons par tout moyen approprié, par exemple par vissage dans un élément ancré à l'extrémité des bâtons. Ou bien, la jante est réalisée en matériau composite d'une seule pièce avec le bulbe et les bâtons, totalement ou en partie, et dans ce dernier cas, un anneau en alliage léger est rapporté.

La construction du bulbe en deux coquilles assemblées selon un plan de joint longitudinal n'est pas limitative non plus. Le bulbe pourrait être formé de deux parties assemblées entre elles selon un plan qui passe par l'axe du moyeu. On pourrait aussi réaliser le bulbe d'une seule pièce sur un noyau réalisé par exemple en mousse ou tout autre matériau approprié.

D'autres variantes sont également envisageables sans pour autant sortir du cadre de l'invention.

## Revendications

1. Roue pour cycle comprenant une jante annulaire (1) prévue pour recevoir un pneumatique, un moyeu central (2) prévu pour assembler la roue à un cadre, et des rayons ou bâtons de liaison, caractérisée par le fait qu'elle présente un bulbe central (4), de forme lenticulaire, ayant deux coquilles (4a, 4b) dont les surfaces extérieures convergent régulièrement depuis l'intersection avec l'axe du moyeu vers un plan de joint longitudinal (4c), et que le bulbe (4) présente au niveau du moyeu une largeur supérieure à la moitié de la largeur du moyeu (2), et que le bulbe (4) présente au niveau du plan de joint (4c) un diamètre compris entre le tiers et les deux tiers du diamètre externe de la roue.

2. Roue selon la revendication 1, caractérisée par le fait que dans un plan passant par l'axe du moyeu (2), la surface externe du bulbe (4) forme une courbe à rayon de courbure évolutif.

3. Roue selon la revendication 2, caractérisée par le fait que dans un plan passant par l'axe du moyeu (2), la section de la surface externe du bulbe (4) forme une courbe fermée définie par l'équation mathématique d'une courbe conique.

4. Roue selon la revendication 1, caractérisée par le fait que la largeur du bulbe est égale à 70 millimètres.

5. Roue selon la revendication 1, caractérisée par le fait qu'au niveau du plan de joint longitudinal, le bulbe (4) présente un diamètre de 300 millimètres.

6. Roue selon la revendication 2, caractérisée par le fait qu'au niveau du plan de joint longitudinal, les deux coquilles (4a, 4b) se rejoignent selon une courbure continue.

7. Roue selon la revendication 2, caractérisée par le fait qu'au niveau du plan de joint longitudinal, les deux coquilles (4a, 4b) se rejoignent selon une arête anguleuse.

8. Roue selon la revendication 1, caractérisée par le fait qu'elle présente deux nappes de rayons (5, 6) raccordées à chacune des coquilles (4a, 4b).

9. Roue selon la revendication 8, caractérisée par le fait que les rayons sont raccordés par paire à des pièces d'assemblage (16) logées dans des évidements (10, 14) de chaque coquille.

10. Roue selon la revendication 9, caractérisée par le fait qu'une étoile (25, 26) présentant des branches (27, 32) est située à l'intérieur de chaque coquille, et relie les différentes pièces d'assemblage (16) à chaque extrémité du corps de moyeu (2).

Fig 1

Fig 2

FIG 3

FIG 4

**FIG 5**

**FIG 6**

# FIG 7

51

52

50

53

# FIG 8

P
R
b
C
a
D
Q

rho = a/(a+b)

**Office européen des brevets**

**RAPPORT DE RECHERCHE EUROPEENNE**

Numéro de la demande

EP 97 11 1386

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 732 428 A (ANTONIO D. MONTE)<br>* colonne 2, ligne 6 - colonne 3, ligne 2; figures *<br>--- | 1 | B60B27/02<br>B60B1/00<br>B60B1/04 |
| A | US 4 995 675 A (CARLOS TSAI)<br>* colonne 2, ligne 13 - colonne 4, ligne 33; figures *<br>--- | 1 | |
| A | US 3 782 778 A (YOSHIAKI TOMZAWA)<br>* colonne 1, ligne 45 - colonne 2, ligne 52; figures *<br>--- | 1 | |
| D,A | FR 2 701 899 A (MAVIC)<br>* page 5 - page 8; figures *<br>--- | 1 | |
| D,A | EP 0 714 791 A (MAVIC)<br>--- | | |
| D,A | US 5 350 221 A (PEARCE)<br>--- | | |
| D,A | WO 93 19944 A (SCHLANGER)<br>--- | | DOMAINES TECHNIQUES RECHERCHES (Int.Cl.6) |
| D,A | FR 2 617 770 A (TSYGANKOV)<br>----- | | B60B |

Le présent rapport a été établi pour toutes les revendications

| Lieu de la recherche | Date d'achèvement de la recherche | Examinateur |
|---|---|---|
| LA HAYE | 4 novembre 1997 | Vanneste, M |